# EUROPEAN PATENT SPECIFICATION

(11) **EP 0 533 102 B1**
(45) Date of publication and mention of the grant of the patent: **14.05.1997**
(21) Application number: 92115739.2
(22) Date of filing: 15.09.1992
(51) Int. Cl.: C08K 13/02, C08L 25/04

(54) **Flame retardant polymeric material**
Flammgehemmtes Polymermaterial
Matériau polymère ignifuge

(30) Priority: 17.09.1991 GB 9119795
(43) Date of publication of application: 24.03.1993
(73) Proprietor: ALBRIGHT & WILSON UK LIMITED, Oldbury, Warley, West Midlands B68 0NN (GB)
(72) Inventor: Agunloye, Francis F'Emi, Newport, Shropshire, TF10 7LD (GB); Williams, Michael John, Bridgnorth, Shropshire, WV15 4DR (GB); Davis, John, Worcester, WR3 7NL (GB); Woolhouse, Christopher Miles, Bearwood, Birmingham, B67 5QX (GB)
(74) Representative: Savidge, Roger Gordon Madgwick

(56) References cited:
- EP-A- 0 085 780
- EP-A- 0 465 927
- EP-A- 0 471 937
- WO-A-85/05626
- Handbook of Chemistry and Physics 52nd Edition, C429

## Description

This invention relates to a method for the production of a flame-retardant polymeric material and to a material obtained by means of the said method.

Red phosphorus and phosphorus-containing compounds are known, individually, as being capable of conferring flame-retardant properties on some polymeric materials (eg. polyamides), though not on others (eg. styrene-based polymers and some olefinic polymers). For each polymer to be treated, there has been found to be a "critical" level of flame-retardant additives, above which flammability of the polymer can in fact be enhanced and below which no acceptable degree of flame-retardancy can be attained.

We have, unexpectedly, found that a blend of red phosphorus with certain phosphorus-containing compounds leads to an effective and economic flame-retardancy of styrenic polymers.

Accordingly, the present invention provides a method for the production of a flame-retardant styrenic composition consisting of a styrenic polymer selected from high-impact polystyrene, styrene/butadiene copolymers, styrene/acrylonitrile copolymers, acrylonitrile/butadiene/ styrene terpolymers and styrene/butadiene/styrene terpolymers, a flame retardant additive and optionally one or more heat stabilisers, light stabilisers, anti-oxidants, anti-static agents, pigments, fillers, lubricants, plasticisers, impact strength modifiers, coupling agents or processing acids, wherein said polymer is compounded with the flame-retardant additive, characterised in that said additive consists of a blend of
(a) from 0.5 to 15% (by weight of the polymer) of red phosphorus and
(b) from 0.5 to 50% (by weight of the polymer) of a water-insoluble phosphorus-containing compound selected from melamine phosphate, melamine pyrophosphate, and ethylene diamine phosphate.

The present invention also provides a flame-retardant styrenic polymer made by the method described in the immediately-preceding paragraph.

Suitably the polymer may be compounded with from 2% to 10% (especially from 5% to 10%) by weight of (a) and from 2% to 20% (especially from 5% to 10%) by weight of (b). Wherever "percentage by weight" is referred to in this specification and claims, the quantities are related to the weight of the polymer.

Preferred embodiments of the present invention will be illustrated, merely by way of example, as follows:

In Examples 1 and 2, powdered polystyrene (High Impact Grade NESTE* SB 735) was processed in 2Kg-batches with the indicated additives and blends. Processing was carried out in a Betol Twin-Screw Extruder at 240°C.
* Registered Trade Mark

Strips of the extruded material, of thickness ranging from 0.79 to 6.35mm (1/32 to 1/4 inch), were subjected to the flammability test prescribed in American National Standard UL-94 V and the Limiting Oxygen Index (LOI) test prescribed in ASTM D2863-77.

Two examples illustrating the invention are given in TABLE 1 below as EXAMPLES 1 and 2. COMPARATIVE EXAMPLES 1 and 2 show the effect of red phosphorus alone and a red phosphorus-melamine blend respectively on the flammability of polystyrene:

**TABLE 1**

| **Ex** | **Additive % by weight** | **LOI %0**_{**2**} | **UL-94V (a)** | | | |
|---|---|---|---|---|---|---|
| | | | **1/4" 6.35** | **1/8" 3.175** | **1/16" 1.59** | **1/32" 0.79 mm** |
| 1 | red P 6.9% melamine phosphate 8.1% | 23.2 | V-0 | V-0 | V-2 | V-2 |
| 2 | red P 6.9% melamine pyrophosphate 8.1% | 23.3 | V-0 | V-2 | V-2 | NR |
| Comp Ex 1 | red P 15% | 23.0 | V-0 | NR | NR | NR |
| Comp Ex 2 | red P 9% melamine 6% | 23.2 | NR | NR | NR | NR |

(a) Flammability results are shown as:
V-0 Non-burning
V-1, V-2 Self-extinguishing
or NR Not Rated

A further three examples illustrating the invention are given in TABLE 2 below as EXAMPLES 3 to 5. COMPARATIVE EXAMPLES 3 to 5 show the effect of red phosphorus alone on the relevant polymers.

In Examples 3 to 5, a red phosphorus - melamine phosphate blend was evaluated in three styrenic polymers.

The polymer grades used were as follows:
High-Impact Polystyrene (HIPS) - BP 4230 grade
Acrylonitrile/butadiene/styrene (ABS) - Lucky 151 grade
Styrene/acrylonitrile (SAN) - Enichem KOSTIL* AF1-2000PA grade

In these examples 500g batches were processed on a PRISM* laboratory twin-screw extruder. Moulded specimens of the extruded materials were tested as in Examples 1 and 2, and the results are shown below in TABLE 2:

**TABLE 2**

| **Ex** | **Additive % by weight** | **Polymer** | **LOI %0**_{**2**} | **UL-94V (a)** | | | |
|---|---|---|---|---|---|---|---|
| | | | | **1/4" 6.35** | **1/8" 3.175** | **1/16" 1.59** | **1/32" 0.79 mm** |
| 3 | red P 6.9% melamine phosphate 8.1% | HIPS (BP4230 grade) | 23.5 | V-0 | V-0 | V-2 | V-2 |
| 4 | red P 6.9% melamine phosphate 8.1% | ABS (Lucky 151 grade) | 23.2 | V-0 | V-2 | V-2 | V-2 |
| 5 | Red P 6.9% melamine phosphate 8.1% | SAN (Enichem Kostil AFI-2000 PA grade) | 23.9 | V-0 | V-2 | V-2 | V-2 |
| Comp Ex 3 | red P 15% | HIPS (BP 4230 grade) | 22.7 | V-O | NR | NR | NR |
| Comp Ex 4 | red P 15% | ABS (Lucky 151 grade) | 22.8 | V-O | NR | NR | V-2 |
| Comp Ex 5 | red P 15% | SAN (Enichem Kostil AFI-2000 PA grade) | 22.1 | V-1 | V-2 | V-2 | V-2 |

(a) Flammability results are shown as:
V-0 Non-burning
V-1, V-2 Self-extinguishing
or NR Not Rated

## Claims

1. A method for the production of a flame-retardant styrenic composition consisting of a styrenic polymer selected from high-impact polystyrene, styrene/butadiene copolymers, acrylonitrile/butadiene/styrene terpolymers, styrene/butadiene/styrene terpolymers, and styrene/acrylonitrile copolymers, a flame-retardant additive and optionally one or more heat stabilisers, light stabilisers, anti-oxidants, anti-static agents, pigments, fillers, lubricants, plasticisers, impact strength modifiers, coupling agents or processing acids, wherein said polymer is compounded with the flame-retardant additive, characterised in that said additive consists of a blend of
(a) from 0.5 to 15% (by weight of the polymer) of red phosphorus and
(b) from 0.5 to 50% (by weight of the polymer) of water-insoluble phosphorus-containing compound selected from melamine phosphate, melamine pyrophosphate and ethylene diamine phosphate.

2. A method according to Claim 1, characterised in that said blend comprises from 2% to 10% by weight of (a) and from 2% to 20% by weight of (b).

3. A method according to Claim 1 or 2, characterised in that said blend comprises from 5% to 10% by weight of (a) and from 5% to 10% by weight of (b).

## Patentansprüche

1. Verfahren zur Herstellung einer flammhemmenden styrolischen Zusammensetzung, bestehend aus
- einem styrolischen Polymer ausgewählt aus hochschlagfestem Polystyrol, Styrol/Butadien-Copolymeren, Acrylnitril/Butadien/Styrol-Terpolymeren, Styrol/Butadien/Styrol-Terpolymeren und Styrol/Acrylnitril-Copolymeren,
- einem flammhemmenden Additiv, und
- wahlweise einem oder mehreren der nachstehenden Zusätze, ausgewählt aus Wärmestabilisatoren, Lichtschutzmittel, Oxidationsschutzmittel, Antistatikmittel, Pigmente, Füllstoffe, Schmiermittel, Weichmacher, schlagzähmachende Hilfsstoffe, Haftvermittler, und Verarbeitungshilfsmittel,
wobei das Polymer mit dem flammhemmendem Additiv compoundiert ist,
dadurch gekennzeichnet, daß
dieses flammhemmende Additiv besteht aus einem Gemisch aus
(a) 0,5 bis 15 Gew.-%, bezogen auf das Gewicht des Polymers, roter Phosphor; und
(b) 0,5 bis 50 Gew.-%, bezogen auf das Gewicht des Polymers, wasserunlösliche phosphorhaltige Verbindung, ausgewählt aus Melamin-phosphat, Melamin-pyrophosphat und Ethylen-diamin-phosphat.

2. Verfahren nach Anspruch 1,
dadurch gekennzeichnet, daß
dieses Gemisch besteht aus 2 bis 10 Gew.-% Komponente (a) und 2 bis 20 Gew.-% Komponente (b).

3. Verfahren nach Anspruch 1 oder 2,
dadurch gekennzeichnet, daß
dieses Gemisch besteht aus 5 bis 10 Gew.-% Komponente (a) und 5 bis 10 Gew.-% Komponente (b).

## Revendications

1. Procédé de production d'une composition styrénique retardatrice de flamme constituée d'un polymère styrénique sélectionné parmi le polystyrène de haute résistance aux chocs, les copolymères de styrène et de butadiène, les copolymères de styrène et d'acrylonitrile, les terpolymères d'acrylonitrile, de butadiène et de styrène et les terpolymères de styrène, de butadiène et de styrène, d'un additif retardateur de flamme et, en option, d'un ou plusieurs stabilisants à la chaleur, stabilisants à la lumière, antioxydants, antistatiques, pigments, charges, lubrifiants, plastifiants, amplificateurs de résistance aux chocs, agents de couplage ou agents auxiliaires de traitement, procédé dans lequel ledit polymère est combiné à l'additif retardateur de flamme, caractérisé en ce que ledit additif est constitué d'un mélange de :
(a) 0,5 à 15 % (en poids du polymère) de phosphore rouge, et de
(b) 0,5 à 50 % (en poids du polymère) d'un composé contenant du phosphore et insoluble dans l'eau sélectionné parmi la mélamine phosphate, la mélamine pyrophosphate et l'éthylènediamine phosphate.

2. Procédé selon la revendication 1, caractérisé en ce que ledit mélange comprend 2 à 10 % en poids de (a) et 2 à 20 % en poids de (b).

3. Procédé selon la revendication 1 ou 2, caractérisé en ce que ledit mélange comprend 5 à 10 % en poids de (a) et 5 à 10 % en poids de (b).
